# EUROPÄISCHE PATENTSCHRIFT

(11) **EP 2 722 235 B1**
(45) Veröffentlichungstag und Bekanntmachung des Hinweises auf die Patenterteilung: **12.08.2015**
(21) Anmeldenummer: 12188874.7
(22) Anmeldetag: 17.10.2012
(51) Int. Cl.: B60R 13/00

(54) **Kunststoffbauteil**
Plastic component
Composant en plastique

(43) Veröffentlichungstag der Anmeldung: 23.04.2014
(73) Patentinhaber: SMP Deutschland GmbH, 79268 Bötzingen (DE)
(72) Erfinder: Schirmer, Hans, 68600 Heiteren (FR); Baer, Christian, 79112 Freiburg-Tiengen (DE)
(74) Vertreter: Westphal, Mussgnug & Partner Patentanwälte mbB

(56) Entgegenhaltungen:
- DE-U1- 29 720 702

## Beschreibung

Die Erfindung betrifft ein Kunststoffbauteil zur Verwendung in einem Kraftfahrzeug mit den Merkmalen des Oberbergriffs des Patentanspruchs 1.

In Kraftfahrzeugen finden Kunststoffbauteile vielfältiger Art in immer weiter steigendem Umfang Verwendung. Dabei handelt es sich beispielsweise um kaschierende Bauteile, wie z.B. Türinnenverkleidungen, Kofferraumabdeckungen und Hutablagen, aber in zunehmendem Maße auch um Trägerbauteile und Versteifungsstrukturen. Eine treibende Kraft für den Einsatz von Kunststoffbauteilen ist dabei die Gewichtsreduktion. Es herrscht somit ein Streben nach der Bereitstellung von leichteren Strukturen, die idealiter weder mit einer signifikanten Erhöhung von Bauraumerfordernissen noch mit einer signifikanten Schwächung der Struktur einhergehen sollen, wobei realiter jedoch auch solche Änderungen unter dem Diktat der Treibstoffeffizienz des Fahrzeugs hingenommen werden.

Aus betriebsinternem Stand der Technik der Anmelderin ist es bekannt, dass ein gegebenes Kunststoffbauteil nach seiner Fertigung lokal mit einer Gitter- oder Wabenstruktur verstärkt wird, um der Einwirkung von Kräften auf das Kunststoffbauteil Rechnung zu tragen. Anzumerken ist dabei, dass Kräfte nicht erst dann auf das Kunststoffbauteil wirken, wenn es bestimmungsgemäß eingebaut ist, sondern in der Regel auch schon während weiterer Schritte im Fertigungsprozess bis zum bestimmungsgemäßen Einbau des Kunststoffbauteils auftreten.

Die Aufgabe der Erfindung besteht darin, ein Kunststoffbauteil bereitzustellen, das dem Ideal eines Kunststoffbauteils mit möglichst hoher Steifigkeit bei möglichst geringem Gewicht und möglichst geringen Bauraumerfordernissen näher kommt als bisher bekannte Kunststoffbauteile. Diese Aufgabe wird gelöst durch ein Kunststoffbauteil mit den Merkmalen des Patentanspruchs 1. Vorteilhafte Ausgestaltungen der Erfindung sind Gegenstand der abhängigen Ansprüche.

Das erfindungsgemäße Kunststoffbauteil zur Verwendung in einem Kraftfahrzeug weist eine Deckschicht und eine Waben- oder Gitterstruktur zur mechanischen Verstärkung der Deckschicht auf. Erfindungswesentlich ist, dass genau eine Deckschicht vorgesehen ist, die nur auf einer Seite der Waben- oder Gitterstruktur angeordnet ist, dass die Deckschicht einstückig mit der Waben- oder Gitterstruktur und gemeinsam mit der Waben- oder Gitterstruktur in einem Herstellungsschritt in Spritzgusstechnik aus Kunststoff geformt ist, so dass die Waben- oder Gitterstruktur in das Kunststoffbauteil integriert ist und dass die Waben- oder Gitterstruktur eine entformbare Struktur ist, welche die drei folgenden Bedingungen sämtlich erfüllt:

Erstens ist die Waben- oder Gitterstruktur aus Strukturelementen in Form von Rippen aufgebaut ist, wobei das Verhältnis des Volumens der Strukturelemente oder Rippen zum Volumen der Deckschicht größer als 0,6 oder gleich 0,6 ist. Die einzelnen Rippen können dabei, insbesondere über ihre Erstreckung in einer Ebene parallel zur Deckschickt betrachtet, z.B. geradlinig, einfach oder mehrfach abknickend, gekrümmt oder auch gewellt sein. Zu diesem Merkmal soll der Vollständigkeit halber angemerkt werden, dass die mathematisch denkbare Realisierung des Merkmals in einem Kunststoffbauteil dadurch, dass man die Stärke der Deckschicht gegen Null gehen lässt, in der Praxis nicht gefertigt werden kann und deswegen technisch unbeachtlich ist.

Zweitens ist die Waben- oder Gitterstruktur so aufgebaut, dass in mindestens einem 50mm mal 50mm großen Flächenabschnitt des Kunststoffbauteils zwei 50 mm lange, zueinander orthogonale Strecken vorhanden sind, welche jeweils keinen Abschnitt der Waben- oder Gitterstruktur in einem Winkel schneiden, der kleiner ist als 20 Grad, und dass mindestens eine der beiden orthogonalen Strecken auf diesem Abschnitt mindestens an drei Stellen die Waben- oder Gitterstruktur schneidet.

Drittens muss ein auf 1mm normiertes Flächenträgheitsmoment, bestimmt an der Schnittfläche, die das höchste Verhältnis des Volumens der Strukturelemente zum Volumen der Deckschicht aufweist, kleiner als 3mm⁴ oder gleich 3mm⁴ sein. Es wird angemerkt, dass dieses Merkmal, welches auf den ersten Blick nicht zu der angestrebten Steifigkeit zu passen scheint, tatsächlich eine Bedingung ist, die dazu dient, dass die angestrebte Gewichtsersparnis noch gewährleistet ist. Eine sehr dichte Anordnung von Rippen mit sehr kleinen Zwischenräumen, die eine sehr hohe Steifigkeit, aber nicht die gewünschte Gewichtsersparnis mit sich bringt, wird dadurch ausgeschlossen.

In dieser Beschreibung wird der Begriff "Oberseite" des Kunststoffbauteils bzw. der Deckschicht für die Fläche der Deckschicht verwendet, die der Waben- oder Gitterstruktur gegenüberliegt. Entsprechend der üblichen Terminologie ist die "Unterseite" jeweils die Seite, die der Oberseite gegenüber liegt. Die Oberseite der Waben- oder Gitterstruktur bzw. der Strukturelemente, die insbesondere durch -ggf. miteinander verbundenen- Rippen, aus denen die Waben- oder Gitterstruktur aufgebaut ist, fällt mit der Unterseite der Deckschicht an den Stellen, an denen diese Strukturelemente oder Rippen vorhanden sind, zusammen. Es wird darauf hingewiesen, dass ein Gitter im Sinne der Erfindung nicht notwendig quadratische oder rechteckige Gitterzwischenräume haben muss, sondern dass deren Form beliebig ist, insbesondere dreieckig, sechseckig, achteckig, trapezförmig, rautenförmig oder parallelogrammförmig sein kann, ohne aber auf Gitterzwischenraumformen mit geradlinig verlaufenden Konturen beschränkt zu sein. Ferner ist eine Variation über das Kunststoffbauteil hinweg ebenfalls möglich.

Der Begriff "Breite" wird für eine Ausdehnung in einer Richtung senkrecht zur Oberflächennormalen an einer gegebenen Stelle der Oberseite verwendet. Die Begriffe "Tiefe" oder "Dicke" beschreiben eine Ausdehnung in Richtung der Oberflächennormalen an einer gegebenen Stelle der Oberseite, jeweils gemessen von einem Punkt der jeweiligen Oberseite. Insbesondere ist somit die Dicke des Kunststoffbauteils an Stellen, an denen keine Strukturelemente oder Rippen vorhanden sind, gegeben durch die Restwandstärke der Deckschicht und an Stellen, an denen Strukturelemente oder Rippen vorhanden sind, durch die Summe aus Restwandstärke der Deckschicht und Rippenhöhe der Strukturelemente oder Rippen.

Dadurch, dass die Deckschicht einstückig mit der Waben- oder Gitterstruktur und gemeinsam mit der Waben- oder Gitterstruktur in einem Herstellungsschritt in Spritzgusstechnik aus Kunststoff geformt ist und somit das bei der Fertigung erhaltene Kunststoffbauteil sofort mit der Waben-oder Gitterstruktur versehen ist, ist unmittelbar eine Struktur vorhanden, die auf das Kunststoffbauteil wirkende Kräfte aufnehmen kann. Erfüllt diese Waben-oder Gitterstruktur zusätzlich die drei genannten Bedingungen, so erhält man ein Kunststoffbauteils mit hoher Steifigkeit, bei dem sowohl das Gewicht geringer ist als bei Kunststoffbauteilen vergleichbarer Steifigkeit und das zugleich auch nur geringe Bauraumerfordernisse stellt. Dies erlaubt es, die Deckschicht wesentlich dünner auszugestalten, als dies bislang möglich war. In einigen Fällen kann dies sogar erreicht werden, ohne dass die Dicke des Kunststoffbauteils an den Stellen, an denen die Strukturelemente oder Rippen, welche die Waben-oder Gitterstruktur bilden, gesteigert werden muss. In anderen Fällen ist es notwendig, dort das Kunststoffbauteil lokal dicker zu fertigen als bisher. Selbst in diesen Fällen kann aber eine Materialersparnis und eine damit einhergehende Gewichtsreduktion beim Bauteil erreicht werden und die lokale Erhöhung des Bauraumerfordernisses bleibt überschaubar.

Ein weiteres Kriterium, dessen Beachtung zu besonders vorteilhaften Kunststoffbauteilen führt, besteht darin, dass der Quotient aus der Flächenträgheitsmomentzunahme und dem Verhältnis des Gittervolumens zum Volumen der Waben- oder Gitterstruktur einen Wert kleiner oder gleich 27 hat, wobei die Flächeriträgheitsmomentzunahme definiert ist als das Verhältnis des Flächenträgheitsmoments des Kunststoffbauteils mit Waben- oder Gitterstruktur zum Flächenträgheitsmoment der Deckschicht ohne Waben- oder Gitterstruktur ist.

In einer besonders bevorzugten Weiterbildung der Erfindung ist vorgesehen, dass die Geometrie der Waben- oder Gitterstruktur über das Kunststoffbauteil hinweg variiert. So kann an jeder Stelle des Kunststoffbauteils eine gezielt, an dort wirkende Kräfte, angepasste Verstärkung bereitgestellt werden, was insbesondere die Möglichkeit eröffnet, die Gewichtsersparnis zu optimieren. Konkret kann dies alternativ oder kumulativ dadurch realisiert werden, dass die Strukturelemente der Waben-oder Gitterstruktur an Kraftangriffspunkten des Kunststoffbauteils und entlang von Kraftwirkungslinien im Kunststoffbauteil in geringerem Abstand voneinander angeordnet sind als in Teilbereichen des Kunststoffbauteils, auf die geringe oder keine Kräfte einwirken und/oder dass die Breite der Strukturelemente der Waben- oder Gitterstruktur an Kraftangriffspunkten des Kunststoffbauteils und entlang von Kraftwirkungslinien im Kunststoffbauteil größer ist als in Teilbereichen des Kunststoffbauteils, auf die geringe oder keine Kräfte einwirken und/oder dass die Dicke der Strukturelemente der Waben- oder Gitterstruktur an Kraftangriffspunkten des Kunststoffbauteils und entlang von Kraftwirkungslinien im Kunststöffbauteil größer ist als in Teilbereichen des Kunststoffbauteils, auf die geringe oder keine Kräfte einwirken.

Besonders vorteilhaft ist es, wenn das Kunststoffbauteil zumindest abschnittsweise spritzgeprägt ist und/oder wenn das Kunststoffbauteil zumindest abschnittsweise physikalisch oder chemisch geschäumt ist. Durch diese Ausgestaltung wird es möglich, eine größere Variabilität der Waben- oder Gitterstrukturen zu erzielen. Aus demselben Grund ist es vorteilhaft, wenn das Kunststoffbauteil mehr Anspritzpunkte aufweist als ein gleich dimensioniertes, massiv gefertigtes Kunststoffbauteil und/oder wenn es mit zyklisch temperierten Werkzeugen gefertigt ist.

Durch die erfindungsgemäße Ausgestaltung wird es ermöglicht, dass ein Kunststoffbauteil realisiert wird, dessen Deckschicht eine Dicke von weniger als 1mm, in besonders bevorzugten Ausgestaltungen sogar weniger als 0,5mm aufweist.

Bevorzugt weist ferner die Waben- oder Gitterstruktur eine Dicke von weniger als 3mm auf.

Um die Gewichtsersparnis zu maximieren hat es sich als vorteilhaft erwiesen, dass der Entformungswinkel der Waben- oder Gitterstruktur kleiner oder gleich 5 Grad ist.

Die Erfindung wird nachstehend anhand von Figuren, die Ausführungsbeispiele der Erfindung zeigen, näher erläutert. Es zeigen:
- Fig. 1:: Ein erstes Ausführungsbeispiel der Erfindung, betrachtet in Richtung auf die Unterseite der Deckschicht,
- Fig. 2:: ein zweites Ausführungsbeispiel der Erfindung, betrachtet in Richtung auf die Unterseite der Deckschicht,
- Fig. 3:: ein drittes Ausführungsbeispiel der Erfindung, betrachtet in Richtung auf die Unterseite der Deckschicht,
- Fig. 4:: ein viertes Ausführungsbeispiel der Erfindung, betrachtet in Richtung auf die Unterseite der Deckschicht,
- Fig. 5:: einen Querschnitt durch einen Abschnitt eines Ausführungsbeispiels der Erfindung zur Erläuterung des prinzipiellen Aufbaus, und
- Fig. 6:: eine Prinzipskizze einer Gitterstruktur, an der die Bestimmung des Flächenträgheitsmoments im Sinne der Erfindung erläutert wird.

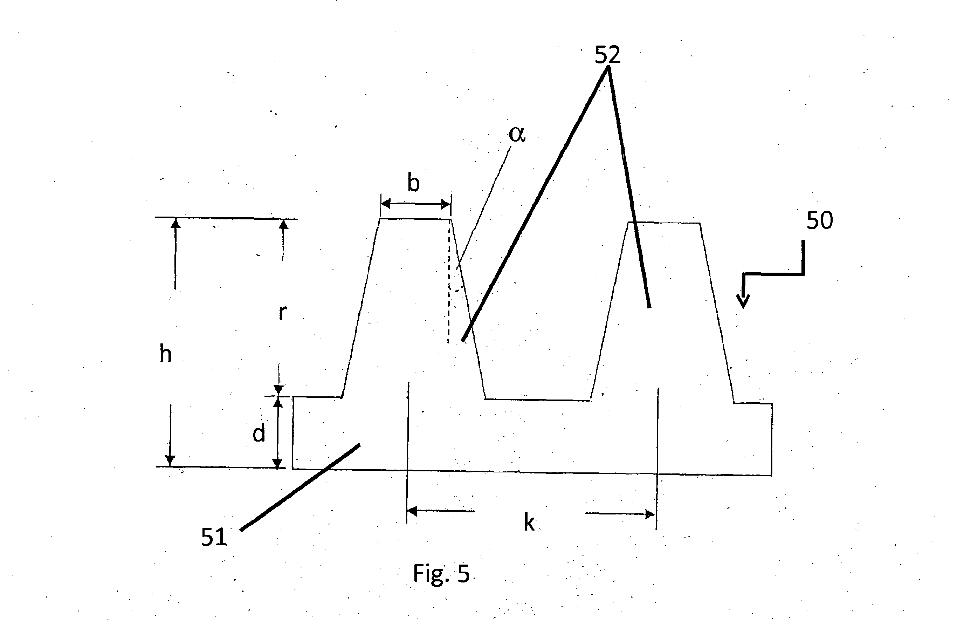

Zunächst soll anhand der Figur 5 der prinzipielle Aufbau eines erfindungsgemäßen Kunststoffbauteils 50 erläutert werden, wobei in der Darstellung gemäß Figur 5 die bei Verwendung des Kunststoffbauteils dem Betrachter zugewandte Seite des Kunststoffbauteils 50 nach unten zeigt. Das Kunststoffbauteil 50 weist eine Deckschicht 51 mit Restwandstärke d und Rippen 52 mit Rippenhöhe r auf, deren Querschnitt die Form eines symmetrischen Trapezes hat. Die Gesamthöhe des Kunststoffbauteils h entspricht somit der Summe aus Restwandstärke d der Deckschicht 51 und Rippenhöhe r. Die Kopfbreite b der Rippen entspricht der Ausdehnung der Schmalseite des symmetrischen Trapezes, der Entformungswinkel α dem Öffnungswinkel des symmetrischen Trapezes. Dadurch ist gewährleistet, dass die resultierende Struktur entformbar ist.

Die in Figur 5 dargestellten Rippen 52 sind Bestandteile einer aus ihnen in Verbindung mit weiteren, in Figur 5 nicht dargestellten Rippen, die teils parallel zu den Rippen 52 und teils auf derselben Oberfläche der Deckschicht 51 zumindest abschnittsweise unter einem Winkel zu den Rippen 52, also nicht vollständig parallel zu den Rippen 52 verlaufen, gebildeten Gitter- oder Wabenstruktur.

Wie anhand der Querschnittsdarstellung der Figur 5 klar zu entnehmen ist, sind die Rippen an genau einer Deckschicht 51 angeordnet, die nur auf einer Seite der aus den Rippen gebildeten Waben- oder Gitterstruktur angeordnet ist, einstückig mit der Deckschicht 51 ausgebildet und gemeinsam mit der Waben- oder Gitterstruktur in einem Herstellungsschritt in Spritzgusstechnik aus Kunststoff geformt, so dass die Waben-oder Gitterstruktur in das Kunststoffbauteil integriert ist.

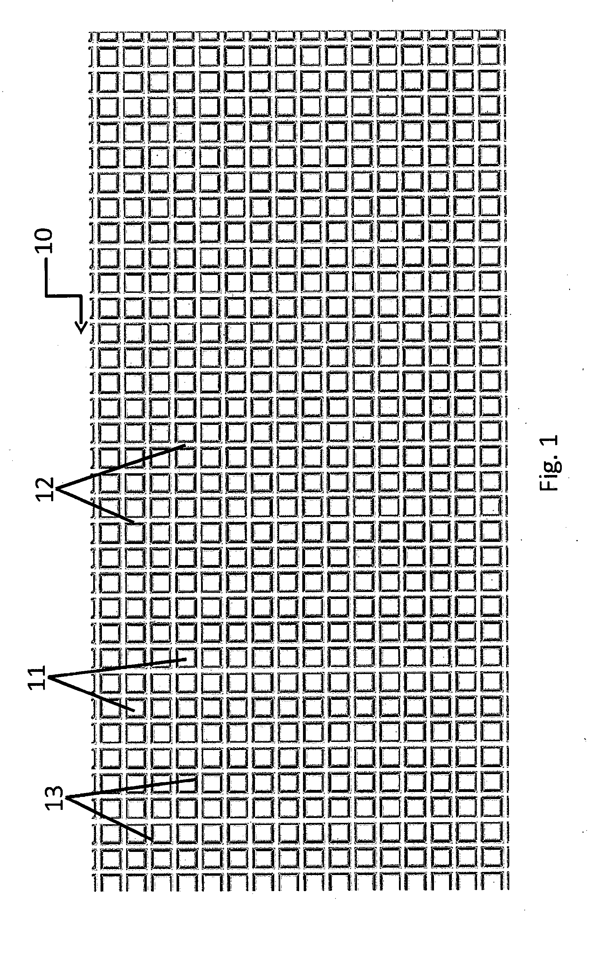

Als nächstes werden vier verschiedene Ausführungsbeispiele der Erfindung anhand der Figuren 1 bis 4 diskutiert. Die Unterschiede zwischen den Ausführungsbeispielen, die in den Figuren 1 bis 4 dargestellt sind, sind in Tabelle 1 zusammengefasst. Diese Ausführungsbeispiele weisen jeweils quadratische Gitterzwischenräume auf, so dass das Gitter durch Angabe einer Kantenlänge hinreichend bestimmt ist; wie bereits weiter oben herausgestellt wurde, sind aber auch andere geometrische Formen der Gitterzwischenräume für den Fachmann realisierbar.

**Tabelle 1**

| | Ausführungsbeispiel gem. Fig.1 | Ausführungsbeispiel gem. Fig.2 | Ausführungsbeispiel gem. Fig.3 | Ausführungsbeispiel gem. Fig.4. |
|---|---|---|---|---|
| Gesamthöhe h [mm] | 3 | 3 | 3.3 | 3 |
| Entformungswinkel α [°] | 8 | 10 | 10 | 10 |
| Restwandstärke d [mm] | 0, 6 | 0,6 | 0,6 | 1 |
| Rippenhöhe r [mm] | 2, 4 | 2,4 | 2,7 | 2,3 |
| Kopfbreite b [mm] | 0,5 | 0,5 | 0,7 | 0,7 |
| Kantenlänge k [mm] | 3 | 3 | 5 | 20 |
| Gewichtsersparnis [%] | 12,9 | 8,3 | 14,36 | 36 |

Figur 1 zeigt ein Kunststoffbauteil 10 mit einer Deckschicht 11, die eine Dicke von 0,6mm hat und einer Gitterstruktur, deren Strukturelemente ein erster Satz von im Abstand von 3mm zueinander verlaufenden Rippen 12 und ein zweiter Satz von Rippen 13, die im Abstand von 3 mm in eine Richtung senkrecht zur Verlaufsrichtung der Rippen 12 des ersten Satzes verlaufen. Dabei weisen die Rippen 12 des ersten Satzes ebenso wie die Rippen 13 des zweiten Satzes eine Rippenhöhe (d.h. eine Dicke) von 2,4mm jeweils den Querschnitt eines symmetrischen Trapezes mit einer Entformungsschräge von 8 Grad und einer Kopfbreite von 0,5mm auf. Wie man der Tabelle 1 entnimmt, liegt die höchste Bauhöhe des Kunststoffbauteils 10, die bei Stellen erreicht wird, an denen Rippen 12,13 angeordnet sind, somit bei 3mm. Dennoch wird bei mindestens genauso guter Steifigkeit des Kunststoffbauteils 10, wie ebenfalls der Tabelle 1 5 zu entnehmen ist, eine Gewichtsersparnis von 12,9% erreicht.

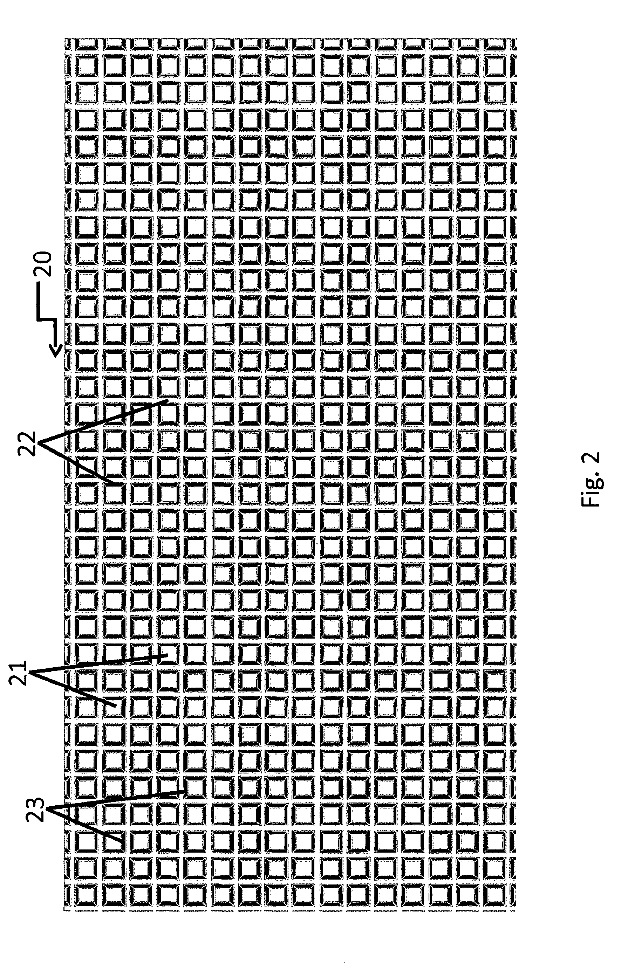

Figur 2 zeigt ein Kunststoffbauteil 20 mit einer Deckschicht 21, und einer Gitterstruktur, deren Strukturelemente ein erster Satz von im Abstand von 3mm zueinander verlaufenden Rippen 22 und ein zweiter Satz von Rippen 23, die im Abstand von 3 mm in eine Richtung senkrecht zur Verlaufsrichtung der Rippen 22 des ersten Satzes verlaufen. Dabei weisen die Rippen 22 des ersten Satzes ebenso wie die Rippen 23 des zweiten Satzes jeweils den Querschnitt eines symmetrischen Trapezes auf. Wie man der Tabelle 1 entnimmt, ist der einzige Parameter, hinsichtlich derer sich die Kunststoffbauteile 10 und 20 unterscheiden, der Entformungswinkel, der beim Kunststoffbauteil 20 bei 10 Grad liegt. Dieser Unterschied führt dazu, dass das Kunststoffbauteil 20 besser herstellbar und insbesondere besser entformbar ist als das Kunsstoffbauteil 10, reduziert α-ber die erreichte Gewichtsersparnis auf 8,3%.

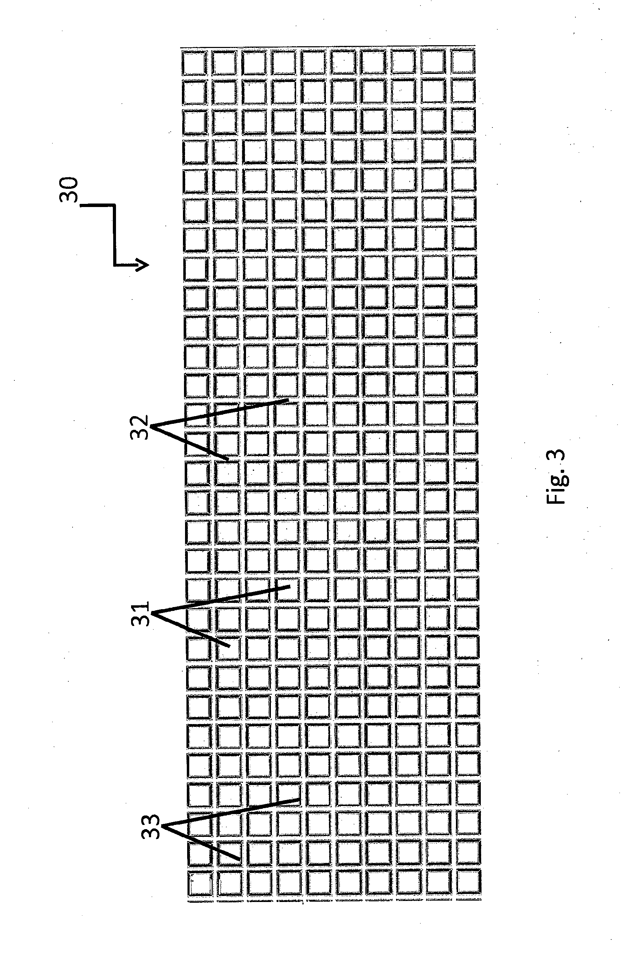

Das Kunststoffbauteil 30 gemäß Figur 3 unterscheidet sich von dem Kunststoffbauteil 20 gemäß Figur 2, wie man anhand der Tabelle 1 leicht nachvollzieht, dadurch, dass in einem Schritt gemeinsam mit der Deckschicht 31 eine Gitterstruktur, deren Strukturelemente ein erster Satz von im Abstand von 5mm zueinander verlaufenden Rippen 32 und ein zweiter Satz von Rippen 33, die im Abstand von 5 mm in eine Richtung senkrecht zur Verlaufsrichtung der Rippen 32 des ersten Satzes verlaufen, spritzgegossen wurde, wobei zudem die Rippen 32,33 jeweils eine Kopfbreite von 0,7mm und eine Rippenhöhe von 2,7mm aufweisen, was die Dicke der Gesamtstruktur auf 3,3mm erhöht.

Mit anderen Worten wurde die Zahl der Strukturelemente der Waben- oder Gitterstruktur reduziert und die damit verbundene Schwächung des Kunststoffbauteils 30 durch eine Verstärkung der Rippen kompensiert. Dieser Unterschied führt, wie anhand der Tabelle 1 festzustellen ist, dazu, dass das Kunststoffbauteil 30 eine Gewichtsersparnis von 14,36% gegenüber einer Ausführung als 2mm starke Platte mit sich bringt. Modellrechnungen haben ergeben, dass dennoch die Stabilität des Kunststöffbauteils 30 höher ist als die einer 2mm starken Platte.

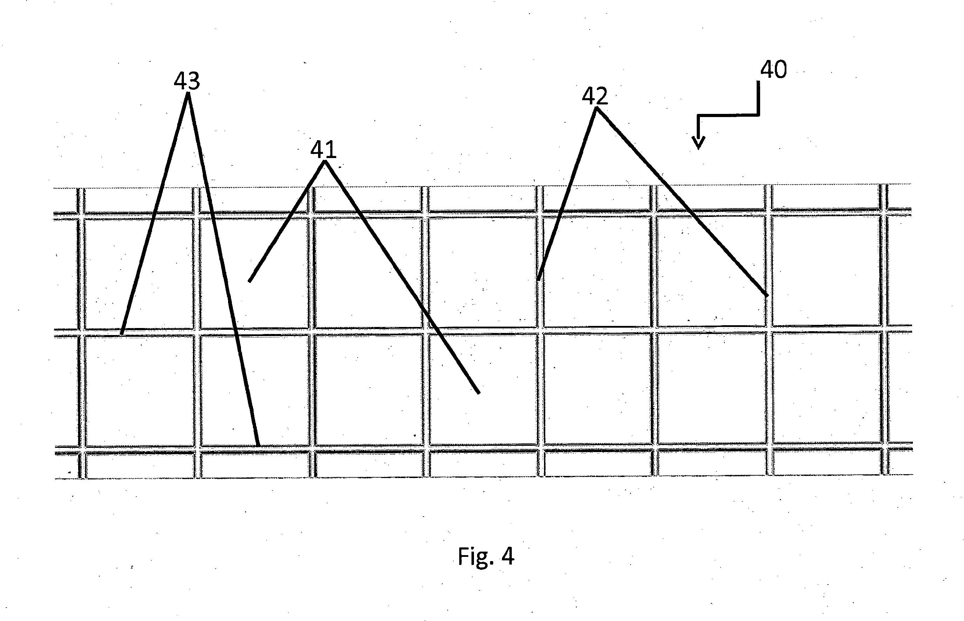

Das in Figur 4 dargestellte Kunststoffbauteil 40 unterscheidet sich von dem Kunststoffbauteil 30 gemäß Figur 3, wie man anhand der Tabelle 1 leicht nachvollzieht, dadurch, dass in einem Schritt gemeinsam mit der Deckschicht 41 eine Gitterstruktur, deren Strukturelemente ein erster Satz von im Abstand von 20mm zueinander verlaufenden Rippen 42 und ein zweiter Satz von Rippen 43, die im Abstand von 20 mm in eine Richtung senkrecht zur Verlaufsrichtung der Rippen 42 des ersten Satzes verlaufen, spritzgegossen wurde. Wegen der größeren Abstände zwischen den Rippen wurde die Dicke der Deckschicht auf 1mm erhöht, während die Rippen 42,33 nun jeweils eine Rippenhöhe von 2,3mm und eine Kopfbreite von 0,5mm aufweisen, was dazu führt, dass die Dicke der Gesamtstruktur wie bei dem Kunststoffbauteil 30 bei 3,3mm liegt.

Mit anderen Worten wurde die Zahl der Strukturelemente der Waben- oder Gitterstruktur reduziert noch weiter und die damit verbundene Schwächung des Kunststoffbauteils 40 durch eine Verstärkung der Deckschicht kompensiert. Dieser Unterschied führt, wie anhand der Tabelle 1 festzustellen ist, dazu, dass das Kunststoffbauteil 40 eine Gewichtsersparnis von sogar 36% gegenüber einer Ausführung als 2mm starke Platte mit sich bringt. Allerdings haben Modellrechnungen ergeben, dass die Stabilität des Kunststoffbauteils 40 etwas geringer ausfällt als die einer 2mm starken Platte.

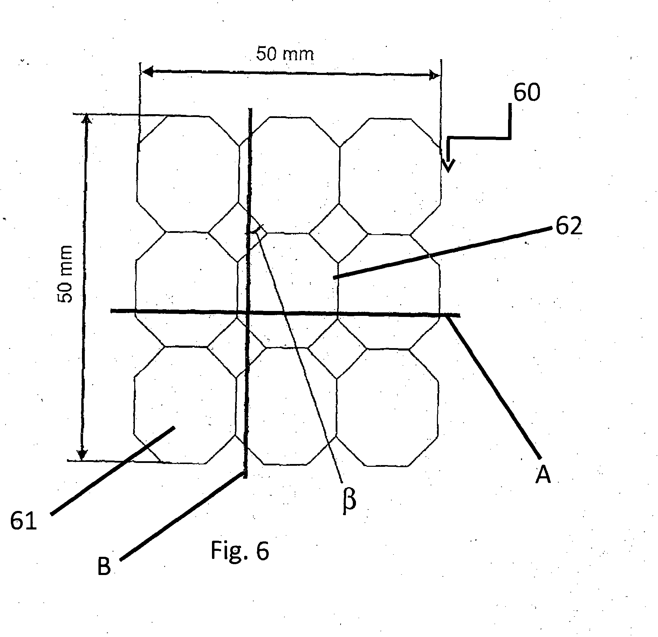

Anhand der Figur 6 kann die Bestimmung des Flächenträgheitsmoments, wie sie in den Ansprüchen beansprucht wird, für eine beispielhafte Gitterstruktur erläutert werden. Die Gitterstruktur 60, von der in Figur 6 ein Ausschnitt von 50mm x 50mm dargestellt ist, weist achteckige Gitterzwischenräume 61 auf, die trennende Gitterstruktur wird von jeweils 8 rippenförmigen Abschnitten 62 gebildet.

Jeder rippenförmige Abschnitt kann in einer beliebigen Geometrie auch als eine einzelne Rippe bezeichnet werden und umgekehrt.

In dem 50mm mal 50mm großen Flächenabschnitt sind insbesondere zwei 50 mm lange, zueinander orthogonale Strecken A,B vorhanden sind, welche jeweils keinen Abschnitt der Waben- oder Gitterstruktur in einem Schnittwinkel β schneiden, der kleiner ist als 20 Grad. Beide orthogonalen Strecken A, B auf diesem Abschnitt schneiden mindestens an drei Stellen die Waben- oder Gitterstruktur 60, die Strecke A an vier Stellen und die Strecke B an sechs Stellen.

Aus diesem Grund weist die Strecke B das höchste Verhältnis des Volumens der Strukturelemente zum Volumen der Deckschicht auf und ist somit die Strecke, auf die das auf 1mm normierte Flächenträgheitsmoment einen Wert von kleiner oder gleich 3 mm⁴ aufweisen sollte. Anhand dieser Bedingung lässt sich für eine gewünschte lokale Struktur des Gitters ableiten, wie die rippenförmigen Abschnitte 62, welche das Gitter bilden, geometrisch ausgestaltet sein müssen, um diese Bedingung zu erfüllen.

### Bezugszeichenliste

- 10, 20, 30, 40, 50: Kunststoffbauteil
- 11, 21, 31, 41, 51: Deckschicht
- 12, 13, 22, 23, 32, 33, 42, 43, 52: Rippen
- 60: Gitterstruktur
- 61: Gitterzwischenraum
- 62: rippenförmiger Abschnitt
- A,B: orthogonale Strecken
- h: Gesamthöhe
- r: Rippenhöhe
- d: Restwandstärke
- b: Rippenbreite
- α: Entformungswinkel
- β: Schnittwinkel

## Patentansprüche

1. Kunststoffbauteil (10,20,30,40,50) zur Verwendung in einem Kraftfahrzeug mit einer Deckschicht (11,21,31,41,51) und mit einer Waben- oder Gitterstruktur (60) zur mechanischen Verstärkung der Deckschicht (11,21,31,41,51),
**dadurch gekennzeichnet,**
**dass** genau eine Deckschicht (11,21,31,41,51) vorgesehen ist, die nur auf einer Seite der Waben- oder Gitterstruktur (60) angeordnet ist,
**dass** die Deckschicht (11,21,31,41,51) einstückig mit der Waben- oder Gitterstruktur (60) und gemeinsam mit der Waben- oder Gitterstruktur (60) in einem Herstellungsschritt in Spritzgusstechnik aus Kunststoff geformt ist, so dass die Waben- oder Gitterstruktur (60) in das Kunststoffbauteil (10,20,30,40,50) integriert ist und dass die Waben- oder Gitterstruktur (60) eine entformbare Struktur ist, die aus Strukturelementen in Form von rippenförmigen Abschnitten (61) aufgebaut ist, wobei
- das Verhältnis des Volumens der Strukturelemente zum Volumen der Deckschicht (11,21,31,41,51) größer als 0,6 oder gleich 0,6 ist, wobei
- die Waben- oder Gitterstruktur (60) so aufgebaut ist, dass in mindestens einem 50mm mal 50mm großen Flächenabschnitt des Kunststoffbauteils (10,20,30,40,50) mindestens zwei 50 mm lange, zueinander orthogonale Strecken (A,B) vorhanden sind, welche jeweils keinen Abschnitt der Waben- oder Gitterstruktur (61) in einem Winkel schneiden, der kleiner ist als 20 Grad, und dass mindestens eine der beiden orthogonalen Strecken (A,B) auf diesem Abschnitt mindestens an drei Stellen die Waben- oder Gitterstruktur (60) schneidet und wobei
- ein auf 1mm normiertes Flächenträgheitsmoment, bestimmt an der Schnittfläche entlang der Strecke (B), die das höchste Verhältnis des Volumens der Strukturelemente zum Volumen der Deckschicht 11,21,31,41,51) aufweist, kleiner als 3 mm⁴ oder gleich 3 mm⁴ ist.

2. Kunststoffbauteil (10,20,30,40,50) nach einem vorstehenden Anspruch,
**dadurch gekennzeichnet, dass** die Geometrie der Waben- oder Gitterstruktur (60) über das Kunststoffbauteil (10,20,30,40,50) hinweg variiert.

3. Kunststoffbauteil (10,20,30,40,50) nach einem vorstehenden Anspruch,
**dadurch gekennzeichnet, dass** die Strukturelemente der Waben- oder Gitterstruktur (60) an Kraftangriffspunkten des Kunststoffbauteils (10,20,30,40, 50) und entlang von Kraftwirkungslinien im Kunststoffbauteil (10,20,30,40,50) in geringerem Abstand voneinander angeordnet sind als in Teilbereichen des Kunststoffbauteils (10,20, 30,40,50) auf die geringe oder keine Kräfte einwirken.

4. Kunststoffbauteil (10,20,30,40,50) nach einem vorstehenden Anspruch,
**dadurch gekennzeichnet, dass** die Breite (b) der Strukturelemente der Waben- oder Gitterstruktur (60) an Kraftangriffspunkten des Kunststoffbauteils (10,20,30,40,50)und entlang von Kraftwirkungslinien im Kunststoffbauteil (10,20,30,40,50) größer ist als in Teilbereichen des Kunststoffbauteils (10,20,30,40,50), auf die geringe oder keine Kräfte einwirken.

5. Kunststoffbauteil (10,20,30,40,50) nach einem der vorstehenden Ansprüche,
**dadurch gekennzeichnet, dass** die Dicke (r) der Strukturelemente der Waben- oder Gitterstruktur (60) an Kraftangriffspunkten des Kunststoffbauteils (10, 20,30,40,50) und entlang von Kraftwirkungslinien im Kunststoffbauteil (10,20,30,40,50) größer ist als in Teilbereichen des Kunststoffbauteils (10,20,30,40,50), auf die geringe oder keine Kräfte einwirken.

6. Kunststoffbauteil (10,20,30,40,50) nach einem der vorstehenden Ansprüche,
**dadurch gekennzeichnet, dass** das Kunststoffbauteil (10,20,30,40,50) zumindest abschnittsweise spritzgeprägt ist.

7. Kunststoffbauteil (10,20,30,40,50) nach einem der vorstehenden Ansprüche,
**dadurch gekennzeichnet, dass** das Kunststoffbauteil (10,20,30,40,50) zumindest abschnittsweise physikalisch oder chemisch geschäumt ist.

8. Kunststoffbauteil (10,20,30,40,50) nach einem der vorstehenden Ansprüche,
**dadurch gekennzeichnet, dass** das Kunststoffbauteil (10,20,30,40,50) mit zyklisch temperierten Werkzeugen gefertigt ist.

9. Kunststoffbauteil (10,20,30,40,50) nach einem der vorstehenden Ansprüche,
**dadurch gekennzeichnet, dass** die Deckschicht (11,21,31,41,51) eine Restwandstärke (d) von weniger als 1mm aufweist und/oder dass die Waben- oder Gitterstruktur eine Dicke (r) von weniger als 3mm aufweist.

10. Kunststoffbauteil (10,20,30,40,50) nach einem der vorstehenden Ansprüche,
**dadurch gekennzeichnet, dass** der Entformungswinkel (α) der Waben- oder Gitterstruktur (60) kleiner oder gleich 5 Grad ist.

## Claims

1. Plastic construction part (10, 20, 30, 40, 50) for use in a motor vehicle comprising a covering layer (11, 21, 31, 41, 51) and a honeycomb or grating structure (60) for mechanical reinforcement of the covering layer (11, 21, 31, 41, 51), **characterized in that** exactly one covering layer (11, 21, 31, 41, 51) arranged only on one side of the honeycomb or grating structure (60) is provided, **in that** the covering layer (11, 21, 31, 41, 51) is formed of plastic as one piece with the honeycomb or grating structure (60) and together with the honeycomb or grating structure (60) in an injection-moulding production step, so that the honeycomb or grating structure (60) is integrated into the plastic construction part (10, 20, 30, 40, 50) and so that the honeycomb or grating structure (60) is a formable structure, that is composed of structural elements in the form of rib-shaped portions (61), wherein
- the ratio of the volume of the structural elements to the volume of the covering layer (11, 21, 31, 41, 51) is greater than 0.6 or equal to 0.6,
- the honeycomb or grating structure (60) being constructed such that at least two 50 mm long mutually orthogonal tracks (A, B) are present in at least a 50 mm by 50 mm large surface portion of the plastic construction part (10, 20, 30, 40, 50), which in each case does not intersect any portion of the honeycomb or grating structure (60) at an angle, which is less than 20 degrees, and so that at least one of the two orthogonal tracks (A, B) on this portion intersects the honeycomb or grating structure (60) at least in three places and wherein
- a moment of inertia, determined at 1 mm area normal to a cut surface along the track (B), which has the highest ratio of the volume of the structural elements to the volume of the covering layer 11, 21, 31, 41, 51) is less than 3 mm⁴ or equal to 3 mm ⁴.

2. Plastic construction part (10, 20, 30, 40, 50) according to an above claim, **characterized in that** the geometry of the honeycomb or grating structure (60) varies all over the plastic construction part (10, 20, 30, 40, 50).

3. Plastic construction part (10, 20, 30, 40, 50) according to an above claim, **characterized in that** the structural elements of the honeycomb or grating structure (60) are arranged at points of force application of the plastic construction part (10, 20, 30,40, 50) and along axes of force action of application in the plastic construction part (10, 20, 30, 40, 50) at a shorter distance from each other than in segments of the plastic construction part (10, 20, 30, 40, 50), on which minimum or no forces act.

4. Plastic construction part (10, 20, 30, 40, 50) according to an above claim, **characterized in that** the width (b) of the structural elements of the honeycomb or grating structure (60) at points of force application of the plastic construction part (10, 20, 30, 40, 50) and along axes of force action in the plastic construction part (10, 20, 30, 40, 50) is greater than in segments of the plastic construction part (10 20, 30, 40, 50), on which minimum or no forces act.

5. Plastic construction part (10, 20, 30, 40, 50) according to any one of above claims, **characterized in that** the thickness (r) of the structural elements of the honeycomb or grating structure (60) at points of force application of the plastic construction part (10, 20, 30, 40, 50.) and along axes of force action in the plastic construction part (10, 20, 30, 40, 50) is greater than in segments of the plastic construction part (10, 20, 30, 40, 50), on which minimum or no forces act.

6. Plastic construction part (10, 20, 30, 40, 50) according to any one of the above claims, **characterized in that** the plastic construction part (10, 20, 30, 40, 50) is compression-injection-moulded at least in portions.

7. Plastic construction part (10, 20, 30, 40, 50) according to any one of the above claims, **characterized in that** the plastic construction part (10, 20, 30, 40, 50) is physically or chemically foamed at least in portions.

8. Plastic construction part (10, 20, 30, 40, 50) according to any one of the above claims, **characterized in that** the plastic construction part (10, 20, 30, 40, 50) is produced with cyclically tempered tools.

9. Plastic construction part (10, 20, 30, 40, 50) according to any one of the above claims, **characterized in that** the covering layer (11, 21, 31, 41, 51) has a residual wall thickness (d) of less than 1 mm and/or **in that** the honeycomb or grating structure has a thickness (r) of less than 3 mm.

10. Plastic construction part (10, 20, 30, 40, 50) according to any one of the above claims, **characterized in that** the release angle (α) of the honeycomb or grating structure (60) is less than or equal to 5 degrees.

## Revendications

1. Composant en matériau synthétique (10, 20, 30, 40, 50) destiné à être utilisé dans un véhicule, comprenant une couche de recouvrement (11, 21, 31, 41, 51) et une structure en nid d'abeilles ou en treillis (60) permettant le renforcement mécanique de la couche de recouvrement (11, 21, 31, 41, 51),
**caractérisé en ce qu'**
il est prévu une seule couche de recouvrement (11, 21, 31, 41, 51) qui est située sur un seul côté de la structure en nid d'abeille ou en treillis (60),
la couche de recouvrement (11, 21, 31, 41, 51) est réalisée en une seule pièce avec la structure en nid d'abeille ou en treillis (60) et est moulée en matériau synthétique conjointement à cette structure (60) dans une étape de procédé par la technique de moulage par injection de sorte que la structure en nid d'abeilles ou en treillis (60) soit intégrée dans le composant en matériau synthétique (10, 20, 30, 40, 50) et que la structure en nid d'abeille ou en treillis (60) soit une structure démoulable réalisée à partir d'éléments de structure sous la forme de segments (61) en forme de nervures, composant dans lequel :
- le rapport du volume des éléments de structure au volume de la couche de recouvrement (11, 21, 31, 41, 51) est supérieur ou égal à 0,6,
- la structure en nid d'abeilles ou en treillis (60) est réalisée de sorte que dans au moins un segment surfacique du composant en matériau synthétique (10, 20, 30, 40, 50) de (50 mm X 50 mm) il y ait au moins deux lignes (A, B) de 50 mm de longueur, perpendiculaire l'une à l'autre, qui ne coupent respectivement aucun segment de la structure en nid d'abeilles ou en réseau (61) selon un angle inférieur à 20 degrés, et qu'au moins l'une des deux lignes orthogonales (A, B) coupe sur ce segment la structure en nid d'abeille ou en treillis (60) en au moins trois points, et
- le moment d'inertie géométrique normalisé sur un millimètre déterminé sur la surface de section le long de la ligne (B) qui présente le plus grand rapport du volume de l'élément de structure par rapport au volume de la couche de recouvrement (11, 21, 31, 41, 51) est inférieur ou égal à 3 mm⁴.

2. Composant en matériau synthétique (10, 20, 30, 40, 50) conforme à la revendication précédente,
**caractérisé en ce que**
la géométrie de la structure en nid d'abeilles ou en treillis (60) varie sur le composant en matériau synthétique (10, 20, 30, 40, 50).

3. Composant en matériau synthétique (10, 20, 30, 40, 50) conforme à l'une des revendications précédentes,
**caractérisé en ce que**
les éléments de structure de la structure en nid d'abeilles ou en treillis (60) sont situés à une plus faible distance les uns des autres au niveau des points d'application des forces du composant en matériau synthétique (10, 20, 30, 40, 50) et le long des lignes de déformation dans le composant en matériau synthétique (10, 20, 30, 40, 50) que dans les zones partielles du composant en matériau synthétique (10, 20, 30, 40, 50) sur lesquelles s'appliquent des forces faibles ou aucune force.

4. Composant en matériau synthétique (10, 20, 30, 40, 50) conforme à l'une des revendications précédentes,
**caractérisé en ce que**
la largeur (b) des éléments de structure de la structure en nid d'abeilles ou en treillis (60) au niveau des points d'application des forces sur le composant en matériau synthétique (10, 20, 30, 40, 50) et le long des lignes de déformation dans le composant en matériau synthétique (10, 20, 30, 40, 50) et plus grande que dans les zones partielles du composant en matériau synthétique (10, 20, 30, 40, 50) sur lesquelles s'appliquent des forces faibles ou aucune force.

5. Composant en matériaux synthétiques (10, 20, 30, 40, 50) conforme à l'une des revendications précédentes,
**caractérisé en ce que**
l'épaisseur (r) des éléments de structure de la structure en nid d'abeilles ou en treillis (60) au niveau des points d'application des forces du composant en matériau synthétique (10, 20, 30, 40, 50) et le long des lignes de déformation dans le composant en matériau synthétique (10, 20, 30, 40, 50) est plus grande que dans les zones partielles du composant en matériau synthétique (10, 20, 30, 40, 50) dans lesquelles s'appliquent des forces faibles ou aucune force.

6. Composant en matériau synthétique (10, 20, 30, 40, 50) conforme à l'une des revendications précédentes,
**caractérisé en ce que**
le composant en matériau synthétique (10, 20, 30, 40, 50) est estampé par injection au moins par segment.

7. Composant en matériau synthétique (10, 20, 30, 40, 50) conforme à l'une des revendications précédentes,
**caractérisé en ce que**
le composant en matériau synthétique (10, 20, 30, 40, 50) est expansé par voie physique ou chimique au moins par segment.

8. Composant en matériau synthétique (10, 20, 30, 40, 50) conforme à l'une des revendications précédentes,
**caractérisé en ce que**
le composant en matériau synthétique (10, 20, 30, 40, 50) est réalisé en utilisant des outils cycliquement équilibrés en température.

9. Composant en matériau synthétique (10, 20, 30, 40, 50) conforme à l'une des revendications précédentes,
**caractérisé en ce que**
la couche de recouvrement (11, 21, 31, 41, 51) présente une épaisseur de paroi résiduelle (d) inférieure à 1 mm, et/ou la structure en nid d'abeilles ou en treillis a une épaisseur (r) de moins de 3 mm.

10. Composant en matériau synthétique (10, 20, 30, 40, 50) conforme à l'une des revendications précédentes,
**caractérisé en ce que**
l'angle de démoulage (α) de la structure en nid d'abeilles ou en treillis (60) est inférieur ou égal à 5 degrés.
